# EUROPÄISCHE PATENTSCHRIFT

(11) **EP 1 080 003 B1**
(45) Veröffentlichungstag und Bekanntmachung des Hinweises auf die Patenterteilung: **09.04.2003**
(21) Anmeldenummer: 99919021.8
(22) Anmeldetag: 20.05.1999
(51) Int. Cl.: B62D 1/19

(54) **CRASHSYSTEM FÜR LENKSÄULE**
STEERING COLUMN CRASH SYSTEM
SYSTEME DE SECURITE EN CAS DE COLLISION POUR COLONNE DE DIRECTION

(30) Priorität: 22.05.1998 CH 112798
(43) Veröffentlichungstag der Anmeldung: 07.03.2001
(73) Patentinhaber: ThyssenKrupp Presta AG, 9492 Eschen (LI)
(72) Erfinder: JÖHR, Hans, CH-3122 Kehrsatz (CH); LÜTHI, Rudolf, CH-3172 Niederwangen (CH); OETLIKER, Jürg, CH-3063 Ittigen (CH); MARXER, Kurt, FL-9485 Nendeln (LI); MARXER, Markus, FL-9487 Gamprin (LI); MEIER, Ronald, FL-9493 Mauren (LI); LUTZ, Christian, A-6714 Nüziders (AT)
(74) Vertreter: Wegmann, Urs
(86) Internationale Anmeldenummer: CH9900215
(87) Internationale Veröffentlichungsnummer: WO99061299

(56) Entgegenhaltungen:
- DE-A- 19 637 176
- US-A- 4 943 028
- US-A- 5 390 955

## Beschreibung

Die Erfindung betrifft eine Lenkvorrichtung für Kraftfahrzeuge mit einer Lenkwelle nach dem Oberbegriff des Patentanspruches 1.

Lenkvorrichtungen für Kraftfahrzeuge sind oft zweiteilig ineinander verschieblich ausgeführt, so dass im Falle einer Frontalkollision die Lenkvorrichtung den Fahrer nicht gefährdet, indem die Lenkvorrichtung beim Aufprall des Körpers auf das Lenkrad nachgibt und die Aufprallenergie absorbiert wird. Bei den bekannten Vorrichtungen ist üblicherweise das verschiebliche Lenkwellenrohr, welches die steuerradseitige Lenkwelle aufnimmt, in einem Gehäuse angeordnet, welches gegenüber dem Fahrzeugchassis durch Verschrauben in vorgegebener Position festgeklemmt ist. Die Verschraubung ist hierbei so ausgeführt, dass beim Aufprall das lenkradseitige Wellenende mit der verschraubten Gehäusekonsole in Achsrichtung, in verklemmtem Zustand, um einen bestimmten Weg verschiebbar ist. Die Aufprallenergie wird durch die Verklemmung entsprechend absorbiert. Um die Energieabsorption im Aufprallfall gleichförmiger zu gestalten, wurden zusätzlich Energieabsorptionselemente zwischen dem längsverschieblichen Wellenteil und dem Chassis des Fahrzeuges angeordnet. Ein Energieabsorptionselement, welches als aufreissbare Blechzunge ausgebildet ist, wurde beispielsweise aus der GB-A-1,390,889, sowie aus der DE-A-1 96 37 176 bekannt.

Ein weiteres Energieabsorptionselement ist in der US-A-4,943,028 offenbart. Die Energieabsorption erfolgt hier dadurch, dass zwischen einer Lenkkonsole und einem Lenkschutzrohr ein Deformationselement, bestehend aus einer energieabsorbierenden Platte angeordnet ist. Die Befestigung erfolgt über einen Bolzen der die Platte durchdringt und im Aufprallfall bei der Längsverschiebung diese Platte deformiert wodurch Energie absorbiert wird.

In der US-A-5,390,955 welche dem Oberbegriff des Anspruchs 1 entspricht, wird ebenfalls eine Lenksäulenbefestigung offenbart welche bei einem Aufprall nachgibt und sich verschiebt. Dämpfungskapseln aus Kunststoff an der Montageklemme sind bei dieser Ausführung keilförmig ausgebildet, derart dass die friktions Haltekraft sich sofort löst wenn die Lenksäule beginnt zu kollabieren.

Ein Nachteil der bekannten Crashsysteme für Lenksäulen besteht darin, dass einerseits die Losbrechkraft nicht in weiten Bereichen von der Energieabsorptionskraft im wesentli-chen unabhängig definiert werden konnte. Das Absorptionsverhalten konnte auch nicht genau reproduzierbar vorgegeben werden.

Es ist Aufgabe der vorliegenden Erfindung ein Crashsystem für eine Lenksäulenanordnung vorzuschlagen, wodurch die Nachteile des Standes der Technik behoben werden. Insbesondere besteht die Aufgabe darin, ein Crashsystem für Lenksäulen zu realisieren, welches eine definierte Losbrechkraft und eine definierte Energieabsorption unter reproduzierbarem Verhalten ermöglicht. Ausserdem soll die Anordnung einfach montierbar und wirtschaftlich herstellbar sein.

Die Aufgabe wird erfindungsgemäss durch die Anordnung nach dem kennzeichnenden Teil des Anspruchs 1 gelöst. Die abhängigen Ansprüche definieren weitere vorteilhafte Ausführungsformen.

Erfindungsgemäss wird die Anordnung so ausgeführt, dass die Losbrechkraft von der Energieabsorptionskraft im Crashfall beim Verschieben der Lenkwelle im Aufprallsfall entkoppelt wird.

Die Verklemmung soll also im Crashfall sofort gelöst werden, wozu ein sogenanntes Losbrechelement dient, um die Aufprallenergie nach dem Losbrechen der Verklemmung im Wesentlichen auf ein Energieabsorptionselement abzugeben. Damit wird erreicht, dass die Energieabsorption über den definierten Verschiebeweg im Wesentlichen nicht mehr durch undefinierte Klemmkräfte beeinflusst wird und die Absorptionswirkung gezielt durch die Ausführung des Absorptionselementes vorgebbar ist.

Für eine Ausführungsform des Losbrechelements werden dazu im Bereich der Klemmbefestigung, wo die grossen Klemmkräfte zwischen Gehäusekonsole und dem stationären Chassisteil auftreten, die durch die Verklemmung aneinander gepressten Flächenteile gegenüber der Gleitrichtung leicht geneigt, d. h. unter einem bestimmten Keilwinkel so angeordnet, dass bereits bei einem kurzen Verschiebeweg die ursprüngliche Verklemmung sofort vermindert wird, indem die beiden Keilflächenteile abhängig von der Winkelneigung auseinanderfahren. Auf diese Weise wird bei einem Aufprall schon nach einer Verschiebung von einigen Zehnteln mm die Verklemmung losgebrochen und die weitere Verschiebung wird nicht mehr durch undefinierte Klemmkräfte bestimmt. Die Gehäusekonsole, welche das Lenkwellenrohr fixiert und somit als Haltekonsole ausgebildet ist, ist über einen Aufreissstreifen mit dem Chassis verbunden. Die Ausführung dieses Aufreissstreifens bestimmt nun im wesentlichen den Grad und den Verlauf des Energieabsorptionsverhaltens. Durch entsprechende Dimensionierung dieses Aufreissstreifens kann das Energieabsorptionsverhalten entsprechend optimal schonend für den Fahrer ausgelegt werden.

Eine weitere bevorzugte Ausführung besteht darin, dass im Bereich der zusammengepressten Gleitflächen beidseitig der Flächen Erhöhungen angeordnet sind, welche sich gegenseitig über eine kurze Wegstrecke abstützen, womit die Gleitfläche im Wesentlichen in den kurzen Berührungszonen der Erhebungen ausgebildet ist und im Verschiebefall, das heisst im Losbrechfall, gleitet die eine Erhebung bereits nach einer kurzen Wegstrecke, beispielsweise von einigen Millimetern, von der anderen Erhebung herunter und erzeugt somit im Crashfall das gewünschte Losbrechen. Eine weitere besonders einfache, bevorzugte Ausführungsform eines Losbrechelementes besteht darin, dass mindestens in einem Teilbereich der geklemmten Flächenteile diese gegenüberliegenden Klemmflächen so abgetreppt ausgeführt sind, dass nach einem kurzen Verschiebeweg die Klemmkraft aufgehoben wird.

Eine besonders kostengünstige und platzsparende Lenksäulenanordnung mit Crashsystem für die Energieabsorption ergibt sich dadurch, dass die Lenkwelle in einem Führungskasten gelagert ist, welcher wiederum mit einer Haltekonsole fest verbunden ist, wobei die Haltekonsole seitlich flanschartige Gleitflächen aufweist, welche beispielsweise durch Verschrauben am Fahrzeugchassis festgeklemmt ist. Die Verklemmung ist derart ausgeführt, dass im Crashfall die Lenkwelle mit der Konsole nachgebend, beispielsweise um mehrere Zentimeter, verschoben werden kann. Das Energieabsorptionselement ist einerseits ortsfest mit dem Chassis verbunden und andererseits, wo die Energieabsorption statt findet, über die Konsole mit der Lenkwelle verbunden. Das Absorptionselement wird vorzugsweise als Blechteil mit Aufreissstreifen ausgeführt, welches beispielsweise bügelförmig als Reissbügel ausgebildet zwischen der Flanschförmigen Haltekonsole und dem Chassis montiert ist. Diese Ausführungsform hat den grossen Vorteil, dass die Befestigung der Anordnung am Chassis mit nur zwei Befestigungsmitteln, vorzugsweise zwei Schrauben, möglich ist. Dies vereinfacht die Ausführung ganz wesentlich und erlaubt auch ein rasches Montieren, was sich positiv auf die Gesamtkosten auswirkt. Die Anzugsmomente der Schrauben liegen hierbei mit Vorteil im Bereich von 15 bis 35 Nm. Diese sehr einfache Ausführung der Anordnung und insbesondere die Möglichkeit die ganze Anordnung mit nur zwei Befestigungsschrauben ohne separate Konsolenführung zu befestigen, ermöglicht auch in einfachen Anwendungsfällen den Einsatz ohne die vorerwähnten speziellen Losbrechelemente. In diesem Fall ist aber die definierte Trennung zwischen Losbrechkraft und Energieabsorption weniger eindeutig, dafür ist aber die Anordnung dann besonders kostengünstig realisierbar.

Die Erfindung wird nun nachfolgend anhand von Ausführungsbeispielen mit schematischen Figuren näher erläutert. Es zeigen:
- Fig. 1: eine Seitenansicht der erfindungsgemässen Halteanordnung für Lenksäulen
- Fig. 2a: ein Querschnitt durch die Halteanordnung gemäss Fig. 1
- Fig. 2b: eine Detaildarstellung der Klemmbefestigung im Querschnitt
- Fig. 3a: eine Detaildarstellung einer Klemmflächenanordnung im Längsschnitt mit geneigten Klemmflächen
- Fig. 3b: eine Aufsicht der Klemmanordnung im Detail 1 gemäss Fig. 3a
- Fig. 4: ein Crashkraftmessdiagramm, welches das Verhalten gemäss dem Stand der Technik zeigt
- Fig. 5: ein Crashkraftmessdiagramm, welches das Verhalten gemäss der Erfindung zeigt
- Fig. 6: eine Detaildarstellung einer weiteren Klemmflächenanordnung im Längsschnitt mit Erhebungen als Distanzelemente zwischen den Gleitflächen
- Fig. 7: eine Detaildarstellung einer weiteren Klemmflächenanordnung im Längsschnitt mit Abtreppungen im Klemmbereich

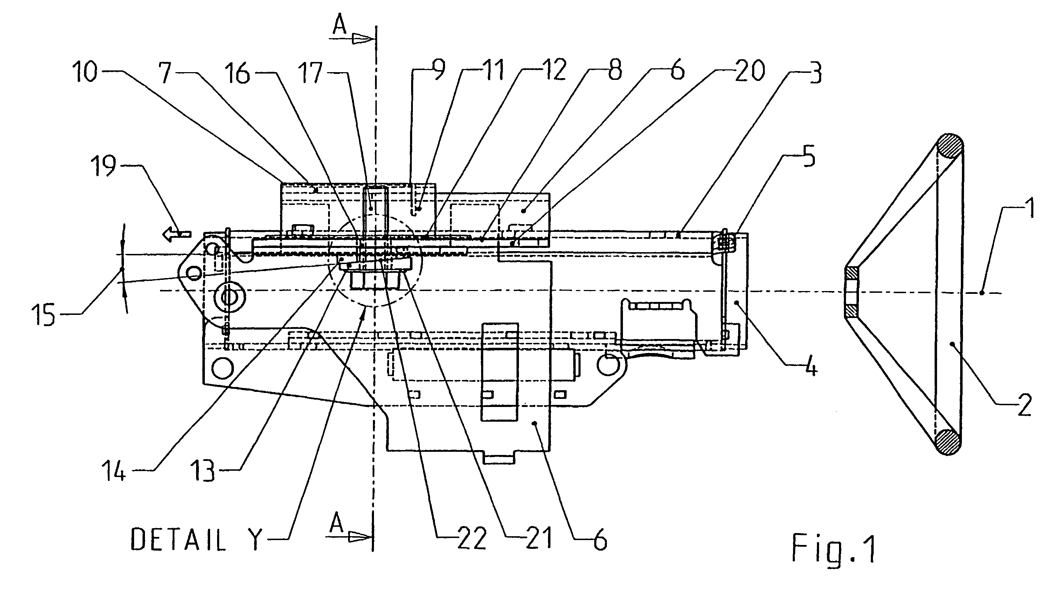

Eine Lenkwelle mit der Lenkwellenachse 1 ist mit einem Lenkrad 2 verbunden und in einem Führungskasten 3 gelagert, welcher, wie dies in Figur 1 dargestellt ist, mit einer Haltekonsole 6 fest, beispielsweise geklemmt, verbunden ist. Der Führungskasten 3 kann zusätzlich höhen- und/oder längsverstellbar angeordnet werden. Die Konsole 6 wiederum ist am Chassis 18 des Fahrzeuges befestigt. Die Welle 1 ist für den Crashfall ineinander verschieblich ausgeführt, womit auch die Konsole 6 für den Crashfall etwa in einem Bereich von bis zu 50 mm, gegenüber dem Chassis 18, längsverschiebbar gelagert werden muss. Die Konsole 6 ist vorzugsweise U-förmig ausgebildet und umschliesst den aufzunehmenden Führungskasten 3 mindestens teilweise. Das Lager-Führungsteil 4 ist beispielsweise durch Halterungen 5 zwischen dem Konsolenteil 6 fixiert. Seitlich der Konsole 6 sind beispielsweise Gleitflächen 8 beidseitig angeordnet, welche einen Längsschlitz 20 aufnehmen. Dieser ist als Laufschlitz ausgebildet und dient zur Aufnahme der Befestigungselemente 13, 16, 17 wie auch Bolzen oder vorzugsweise Klemmschrauben 17.

Die Konsole 6 ist vorzugsweise als Blechteil ausgeführt, welches besonders kostengünstig hergestellt werden kann, wenn dieses ausgestanzt wird und als Biegeteil ausgeführt wird. Neben dem Kostenvorteil hat dies auch den Vorteil, dass eine höhere Biegesteifheit möglich ist als z.B. bei Schweisskonstruktionen.

Durch die Klemmschrauben 17 wird die Konsole 6 an dem Chassis 18 so festgeschraubt, dass im Aufprallfall die Lenkwelle mit dem Führungskasten 3 innerhalb der Laufschlitzlänge verschieblich ist. Um die Verklemmung auch bei geringen Verschiebungswegen sofort loszubrechen, ist im Endbereich des Laufschlitzes 20 in der Ausgangsklemmposition die eine konsolenseitige Klemmfläche 22 unter einem Keilwinkel 15 geneigt als Keilschuh 14 ausgeführt. Die schraubenseitige andere Keilfläche 22 ist als Gleitschuh 13 ebenfalls unter dem Keilwinkel 15 geneigt ausgeführt. Der Gleitschuh 13 ist vorzugsweise so ausgebildet, dass er in der Laufbahn 20 im Verschiebefall gleitet. Da die Klemmflächen gegenüber der Klemmrichtung nun nicht mehr unter 90° stehen ist ein sofortiges Losbrechen der Klemmkraft auch bei kurzen Verschiebewegen möglich. Geeignete Keilwinkel sind von 2° bis 15°, vorzugsweise von 3° bis 8°.

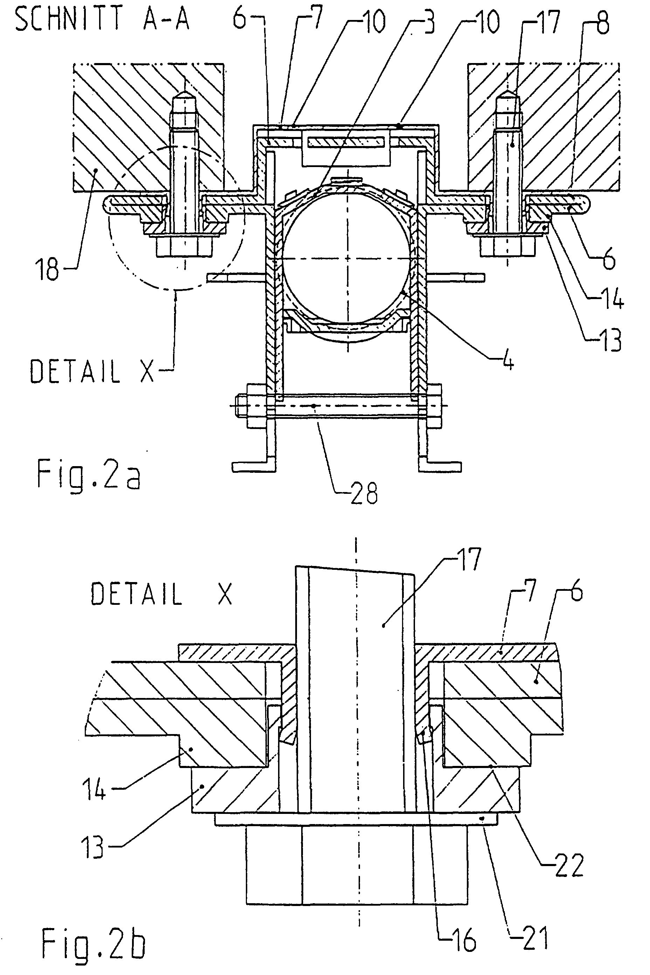

Die Konsole 6 ist beispielsweise direkt mit Schrauben 17 am Chassis 18 festgeschraubt, wobei der Gleitschuh 13 vorzugsweise schraubkopfseitig mit einer Unterlegscheibe 21 angeordnet ist. In Figur 2 ist die Anordnung im Querschnitt dargestellt, woraus die bevorzugte Befestigungsweise beidseitig der Wellenachse 1 am Chassis 18 dargestellt ist. Der Keilschuh 14 kann beispielsweise mit seiner Keilfläche direkt in die Konsole 6 eingearbeitet sein. Dieser lässt sich aber einfacher und präziser herstellen, wenn er als separates, scheibenförmiges Teil hergestellt wird und an der Konsole 6 befestigt wird.

Zur definierten Festlegung des Energieabsorptionsverhaltens wird zusätzlich ein Energieabsorptionselement 7, 9, 10, 11 vorgesehen, welches vorzugsweise als Blechteil mit einem Aufreissstreifen 9 mit Haltelasche ausgebildet ist. Vorteilhafterweise wird das Blechteil 7 als Reissbügel 7 ausgebildet, welches die U-förmige Konsole 6 im oberen Bereich umschliesst und mit der Verklemmung der Konsole 6 am Chassis 18 ortsfest in der Ausgangsposition verbleibend fixiert ist. Der Aufreissstreifen 9 wird mit Vorteil im oberen flachen U-förmig ausgebildeten Blechteil des Reissbügels 7 vorgesehen. Hierbei ist der Aufreissstreifen 9 als Teil des Reissbügels 7 so gegen die Konsole 6, gebogen, dass die dadurch gebildete Haltelasche gegenüber der Konsole fixiert werden kann, beispielsweise geklemmt oder mit einer Schweissverbindung 11. Der Aufreissstreifen 9 mit Haltelasche befindet sich zwischen Kerbbahnen 10 und wird eingestellt durch die Materialdicke des Reissbügelbleches, durch die Materialfestigkeit, sowie durch die Rollbreite mit entsprechendem Rollradius. Eventuell ist es erwünscht, beispielsweise durch Variieren der Rollbreite, das Absorptionskraftprofil über den Weg variieren zu können.

Die vorerwähnte konstruktive Ausführung der ganzen Halteanordnung, in dem der Reissbügel 7 mit den Gleitflächen 12 zwischen dem Konsolenflansch 6, 8 und dem Chassis 18 geklemmt wird, weist auch besondere Vorteile auf ohne die Verwendung zusammen mit den speziellen Losbrechelementen 13, 14, 22, 26, 27, 29. Sie ermöglicht eine einfache Montage bei kostengünstiger Ausführung, gutem Betriebsverhalten und hoher Stabilität der Anordnung, insbesondere dann, wenn die Anordnung, wie bevorzugt, nur mit zwei Schrauben 17 am Chassis 18 befestigt wird.

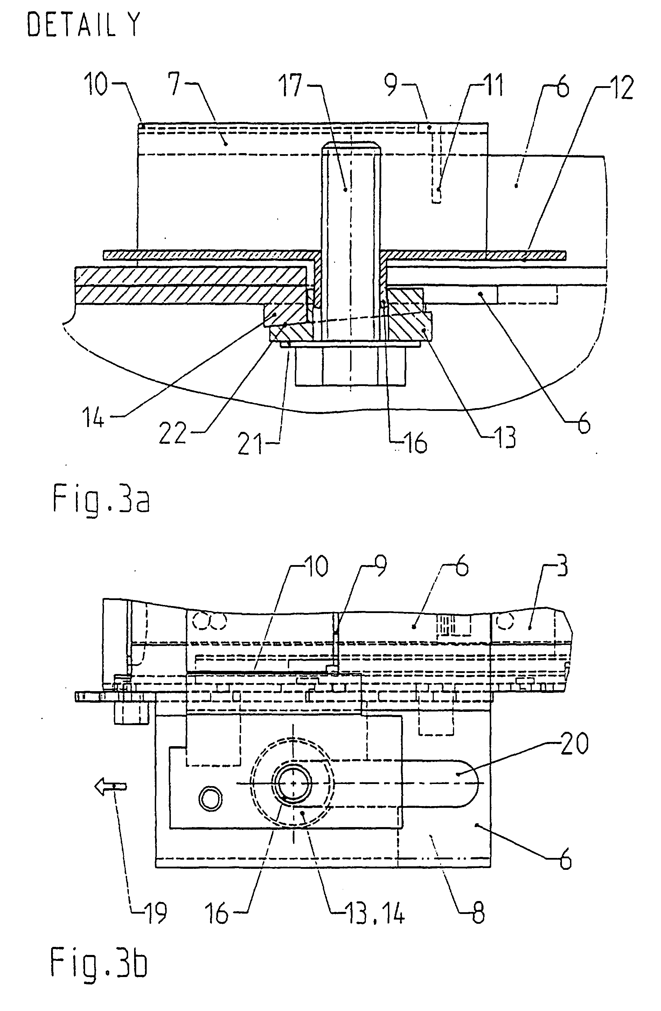

Der Gleitschuh 13 wird, wie in Figur 3a dargestellt, so ausgeführt, dass ein Teil davon im Laufschlitz 20 beim Verschieben der Konsole 6 gegenüber dem Gleitschuh 13 verdrehsicher gleiten kann. Die Keilflächen 22 zwischen dem Keilschuh 14 und dem Gleitschuh 13 bewegen sich hierbei auseinander und die Verklemmung wird losgebrochen, wobei dann die Haltekraft bzw. die Energieabsorption durch den Aufreissstreifen 9 bestimmt wird.

Der Reissbügel 7 ist im Befestigungsbereich mit Vorteil beidseitig als Blechzunge ausgeführt, welche zwischen dem Chassis 18 und der Flanschförmigen Gleitfläche 8 der Konsole 6 liegt und durch die Verschraubung 17 ortsfest gegenüber dem Chassis 18 ebenfalls festgeklemmt wird. Im Aufprallfall verschiebt sich somit die Konsole 6 maximal entsprechend der Laufschlitzlänge 20 gemeinsam mit dem Keilschuh 14, welcher sich somit von dem stationären Gleitschuh 13 wegbewegt, wobei der Reissbügel 7 ebenfalls stationär verbleibt und der Aufreissstreifen 9, welche an einem Konsolenteil 6 fixiert ist, aufgerissen wird. Um eine spielfreie Verbindung zwischen Gleitschuh 13 und dem Reissbügel 7 herzustellen, wird die Bohrung im Reissbügel 7 mit Vorteil so mit einem Bördel 16 versehen, dass der Gleitschuh 13 mit dem Bördel 16 zusammengeführt wird, wie dies auch aus der Figur 2a ersichtlich ist. In der Aufsicht ist diese Anordnung in Figur 3b dargestellt, wo der Laufschlitz 20 ersichtlich ist.

Eine weitere Verbesserung der Reproduzierbarkeit des Losbrechverhaltens kann erreicht werden, indem die Klemmflächen 22, das heisst die geneigte Gleitschuhfläche 13 und die Keilschuhfläche 14 definiert oberflächenbehandelt wird. Dies kann beispielsweise dadurch erfolgen, dass die Oberflächen gezielt aufgerauht und/oder beschichtet werden und/oder auch geschmiert werden.

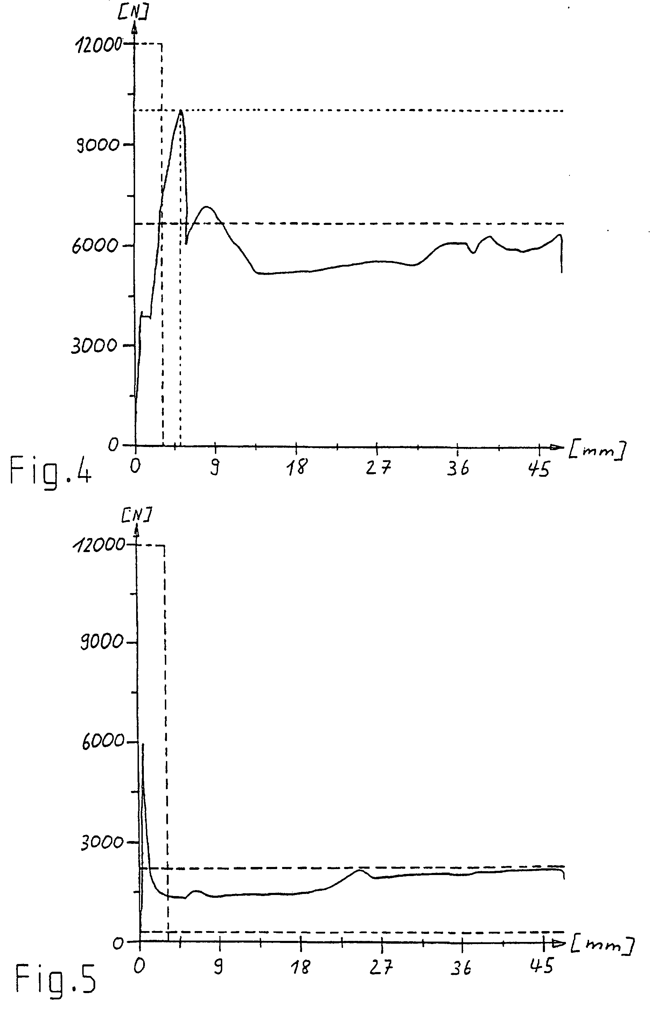

Das Anzugsmoment der Klemmschrauben wird mit Vorteil mit Drehmomentüberwachung im Bereich von 15 bis 35 Nm eingestellt. In Figur 4 ist in einem Losbrechdiagramm das gemessene Verhalten der Losbrechkraft über einen Weg von 45 mm dargestellt, wobei die Verschraubung mit einem Drehmoment von 25 Nm erfolgte. Daraus ist ersichtlich, dass die Losbrechkraft über 9000 N betrug und erst nach einem längeren Weg von etwa 5 mm abfällt, wobei aber eine relativ hohe Restklemmkraftwirkung von etwa 6000 N undefiniert verbleibt bis der Weg von 45 mm abgearbeitet worden ist. Unter denselben Messbedingungen wird in Figur 5 das erfindungsgemässe Verhalten gezeigt mit einer Anordnung gemäss Figur 1. Die Verschraubung wurde ebenfalls mit 25 Nm Drehmoment eingestellt. Die Losbrechkraft erreicht 6000 N und fällt steil und definiert nach etwa 1 mm Weg sofort ab, um nachher auf tiefem Niveau mit Losbrechelementen mit geneigten Flächen unter 2000 N gleichförmig über den ganzen Weg von 45 mm zu verbleiben. Bei der erfindungsgemässen Anordnung wird also nach dem kurzen Losbrechvorgang die Absorptionsenergie definiert, reproduzierbar und vorgebbar durch das Absorptionselement wie vorzugsweise eine Aufreisslasche bestimmt, beispielsweise mit Energieabsorptionskräften von 1200 bis 5500 N vorgegeben wird.

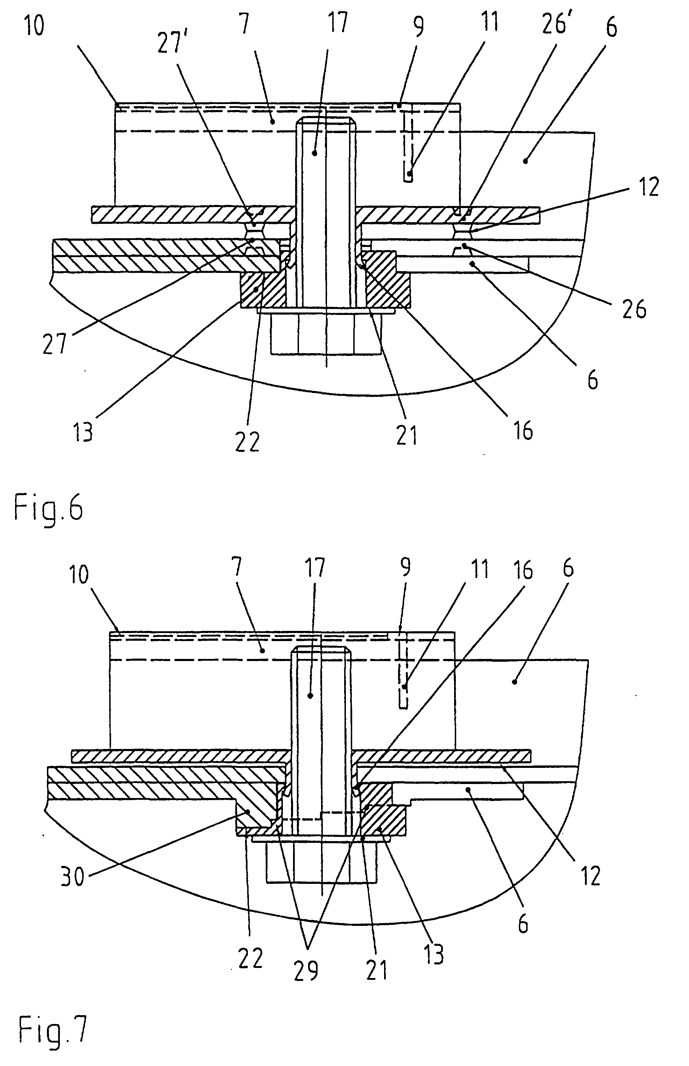

Eine weitere sehr geeignete Möglichkeit, ein Losbrechelement zu realisieren, wie in Figur 6 dargestellt, besteht darin, wenn beispielsweise zwischen den Gleitflächen 8, 12 Erhebungen 26, 27 angeordnet werden, um die Gleitflächen in der Ausgangsposition in einem geringen Abstand von einigen Zehnteln mm bis ca 3mm zu halten. Die Erhebungen 26, 27 sind beidseitig der Gleitflächen im Wesentlichen symmetrisch so anzuordnen, dass dort, wo die Erhebungen zusammengeklemmt aufeinander liegen, kurze Gleitflächen 12 entstehen, welche im Verschiebefall, das heisst im Crashfall, voneinander runtergleiten und so auf eine kurze Distanz im mm-Bereich die Klemmkraftwirkung aufheben, womit dann die Energieabsorption vom Absorptionselement 7, 9, 10, 11 definiert übernommen wird. Solche Erhebungen können beispielsweise noppenartig ausgebildet werden und beidseitig in Wellenachsenlängsrichtung der Schraubbefestigung 17 angeordnet werden. Es können aber auch mehrere noppenartige Erhebungen nebeneinander oder hintereinander und weiter abgetreppt oder auch auf einer schiefen Ebene liegend angeordnet werden, je nach Anforderung der Klemmkräfte, der Reibungskräfte und der Verschiebewege beziehungsweise der Dimensionierung der gesamten Anordnung. Im vorliegenden Fall wird der Gleitschuh 13 beispielsweise als einfache Beilagscheibe realisiert. Es ist aber auch möglich, diese noppenartigen Ausbildungen im Bereich des Gleitschuh 13 vorzusehen.

In Figur 7 ist eine weitere äusserst vorteilhafte und einfach zu realisierende Ausführung eines Losbrechelementes dargestellt. Bei dieser Ausführung werden die aneinaderliegenden, geklemmten Flächen des Gleitschuh 13 und des ursprünglichen Keilschuh 14 nicht keilförmig ausgeführt, sondern treppenartig ausgebildet. Die Stufenweite der treppenartigen Ausbildung definiert hierbei den Losbrechweg. Diese Ausführung ist besonders einfach und kostengünstig realisierbar. Die vorerwähnten verschiedenen Typen der Losbrechelemente können untereinander auch in kombinierter Form verwendet werden.

## Patentansprüche

1. Lenkvorrichtung für Kraftfahrzeuge mit einer Lenkwelle, die von einem Führungskasten (3) geführt ist, welcher mit einer Haltekonsole (6) geklemmt verbunden ist, wobei die Konsole mindestens eine Gleitfläche (8) entlang der Wellenachse (1) aufweist, welche einen Verschiebeweg (20) gegenüber dem Chassis (18) zulässt und dass Klemmmittel (13, 16, 17) vorgesehen sind zur axialen Halterung der Konsole (6) in der Ausgangsposition des Verschiebeweges (20) und **dass** in mindestens einem Teilbereich der Ausgangsposition die Klemmmittel (13, 16, 17,) ein Losbrechelement (13, 14, 29, 30) mit einer Klemmfläche (22) enthalten, so dass bei einer Verschiebung der Konsole in Wellenachsenrichtung (19) die Klemmkraft verringert wird, **dadurch gekennzeichnet, dass** das Losbrechelement (13, 14, 29, 30) zwischen der Gleitfläche (8) und dem Chassis (18) paarweise in der Ausgangsposition übereinander liegende Erhebungen (26, 26', 27, 27') aufweist, so dass die konsolenseitige Erhebung (26, 27) im Verschiebefall von der chassisseitigen Erhebung (26', 27') heruntergleitet.

2. Vorrichtung nach Anspruch 1 **dadurch gekennzeichnet, dass** mindestens zwei Erhebungspaare (26, 26', 27, 27') vorgesehen sind und dass in Wellenachsenrichtung (1) das Klemmmittel (17) dazwischen liegt, wobei die Erhebungen (26, 26', 27, 27') vorzugsweise noppenartig ausgebildet sind, wobei vorzugsweise die zwischen den Erhebungen liegenden Flächen (12) geneigt, insbesondere auf einer geneigten Fläche liegend, ausgebildet sind.

3. Vorrichtung nach einem der vorhergehenden Ansprüche **dadurch gekennzeichnet, dass** die Konsole (6) über, einen gegenüber dem Chassis (18) ortsfesten Energieabsorptionselement (9, 10) verbunden ist, vorzugsweise mit einem Aufreissstreifen (9, 10).

4. Vorrichtung nach einem der vorhergehenden Ansprüche **dadurch gekennzeichnet, dass** die Konsole (6) den Führungskasten (3) klemmt und beidseitig Gleitflächen (8) und Mittel (13, 16, 17) zur Klemmbefestigung am Chassis (18) aufweist, wobei diese Klemmbefestigung vorzugsweise geschraubt ist.

5. Vorrichtung nach einem der vorhergehenden Ansprüche **dadurch gekennzeichnet, dass** der Aufreissstreifen eine Gleitfläche (12) aufweist und diese vorzugsweise zwischen Chassis (18) und Gleitfläche (8) der Konsole (6) liegt.

6. Vorrichtung nach einem der vorhergehenden Ansprüche **dadurch gekennzeichnet, dass** die Klemmflächen (22) als ringförmige Scheiben ausgebildet sind, wobei die obere Scheibe (14) an der Konsole (6) fixiert ist und die untere Scheibe (13) als Gleitschuh (13) mit den Klemmitteln ortsfest am Chassis (18) gehalten wird.

7. Vorrichtung nach einem der vorhergehenden **Ansprüche dadurch gekennzeichnet, dass** die Gleitfläche (8) in der Konsole (6) einen Laufschlitz (20) zur geführten Aufnahme von Klemmmittelteilen (16, 17, 13) aufweist.

8. Vorrichtung nach einem der vorhergehenden Ansprüche **dadurch gekennzeichnet, dass** mindestens eine der Klemmflächen (22) oberflächenbehandelt ist, wie beschichtet, aufgerauht oder geschmiert ist.

9. Vorrichtung nach einem der vorhergehenden Ansprüche **dadurch gekennzeichnet, dass** die Konsole (6) als Blechteil ausgeführt ist, vorzugsweise als Biege- oder Stanzteil, insbesondere als gefaltetes Blechteil.

10. Vorrichtung nach einem der vorhergehenden Ansprüche **dadurch gekennzeichnet, dass** das Energieabsorptionselement (9, 10) als Reissbügel (7) ausgebildet ist und vorzugsweise ortsfest direkt am Chassis (18) mit Klemmmitteln (17) fixiert ist und verbindend festgeklemmt ist.

## Claims

1. Steering device for motor vehicles with a steering shaft guided by a guide box (3) which is connected by clamping with a retaining console (6), where the console has at least one slip surface (8) along the shaft axis (1) which allows a travel (20) in relation to the chassis (18), and that clamping means (13, 16, 17) are provided for axial retention of the console (6) in the starting position of the travel (20) and that in at least one part area of the starting position the clamping means (13, 16, 17) contain a break-away element (13, 14, 29, 30) with a clamping surface (22) so that on movement of the console in the shaft axial direction (19) the clamping force is reduced, **characterised in that** the break-away element (13, 14, 19, 20) between the slip surface and the chassis (18) has protrusions (26, 26', 27, 27') overlaying each other in pairs in the starting position so that on movement, the protrusion (26, 27) on the console side slides below the protrusion (26', 27') on the chassis side.

2. Device according to claim 1, **characterised in that** at least two protrusion pairs (26, 26', 27, 27') are provided and that in the shaft axial direction (1) the clamping means (17) lie between these, where the protrusions (26, 26', 27, 27') are preferably formed knob-like, where preferably the areas (12) lying between the protrusions slope, in particular lying on a sloping surface.

3. Device according to any of the previous claims, **characterised in that** the console (6) is connected via an energy absorption element (9, 10) of fixed location in relation to the chassis (18), preferably with a tear strip (9, 10).

4. Device according to any of the previous claims, **characterised in that** the console (6) clamps the guide box (3) and on both sides has slip surfaces (8) and means (13, 16, 17) for fixing by clamping to the chassis (18), where this clamp fixing is preferably screwed.

5. Device according to any of the previous claims, **characterised in that** the tear strip has a slip surface (12) which lies preferably between the chassis (18) and the slip surface (8) of the console (6).

6. Device according to any of the previous claims, **characterised in that** the clamp surfaces (22) are formed as ring-like discs, where the upper disc (14) is fixed to the console (6) and the lower disc (13) is held by the clamping means as a slip shoe (13) in fixed location on the chassis (18).

7. Device according to any of the previous claims, **characterised in that** the slip surface (8) in the console (6) has a run slot (12) for guided reception of clamping means parts (16, 17, 13).

8. Device according to any of the previous claims, **characterised in that** at least one of the clamping surfaces (22) is surface-treated such as coated, roughened or lubricated.

9. Device according to any of the previous claims, **characterised in that** the console (6) is formed as a sheet metal component, preferably as a bent or punched component, in particular as a folded sheet metal component.

10. Device according to any of the previous claims, **characterised in that** the energy absorption element (9, 10) is formed as a tear bracket (7) and fastened, preferably in fixed location, directly on the chassis (18) with clamping means (17) and clamped as connection.

## Revendications

1. Colonne de direction pour véhicules automobiles qui comporte un arbre de direction qui est guidé par un caisson de guidage (3) relié par serrage à une console de maintien (6), dans laquelle la console présente le long de l'axe (1) de l'arbre au moins une surface de glissement (8) qui permet un trajet de coulissement (20) par rapport au châssis (18), et dans laquelle des moyens de serrage (13, 16, 17) sont prévus pour tenir axialement la console (6) dans la position initiale du trajet de coulissement (20), et dans laquelle les moyens de serrage (13, 16, 17) comportent dans au moins une zone partielle de la position initiale, un élément de détachement par rupture (13, 14, 29, 30) à surface de serrage (22) de sorte que la force de serrage est réduite lors d'un coulissement de la console dans la direction (19) de l'axe de l'arbre,
**caractérisée en ce que** l'élément de détachement par rupture (13, 14, 29, 30) comporte entre la surface de glissement (8) et le châssis (18), des bosses (26, 26', 27, 27') superposées par paires dans la position initiale, d'une manière telle que la bosse (26, 27) côté console glisse vers le bas en cas de déplacement de la bosse (26', 27') côté châssis.

2. Dispositif selon la revendication 1, **caractérisée en ce qu'**il comprend au moins deux paires (26, 26', 27, 27') de bosses et **en ce que** le moyen de serrage (17) est disposé entre elles dans la direction de l'axe (1) de l'arbre, les bosses (26, 26', 27, 27') étant de préférence en forme de boutons, la configuration des surfaces (12) situées entre les bosses étant de préférence inclinée, en particulier reposant sur une surface inclinée.

3. Dispositif selon l'une quelconque des revendications précédentes, **caractérisé en ce que** la console (6) est attachée au moyen d'un élément d'absorption (9, 10) d'énergie, de préférence une bande de déchirage (9, 10), fixe par rapport au châssis (18).

4. Dispositif selon l'une quelconque des revendications précédentes, **caractérisé en ce que** la console (6) serre le caisson de guidage (3) et comporte, des deux côtés, des surfaces de glissement (8) et des moyens (13, 16, 17) de fixation par serrage sur le châssis (18), cette fixation par serrage étant de préférence un assemblage par vissage.

5. Dispositif selon l'une quelconque des revendications précédentes, **caractérisé en ce que** la bande de déchirage comporte une surface de glissement (12) et que celle-ci est de préférence située entre le châssis (18) et la surface de glissement (8) de la console (6).

6. Dispositif selon l'une quelconque des revendications précédentes, **caractérisé en ce que** les surfaces de serrage (22) consistent en des disques annulaires, le disque supérieur (14) étant fixé à la console (6) et le disque inférieur (13) étant tenu de façon fixe sur le châssis (18) avec les moyens de serrage en tant que patin de glissement (13).

7. Dispositif selon l'une quelconque des revendications précédentes, **caractérisé en ce que** la surface de glissement (8) dans la console (6) comporte une fente de glissement (20) pour recevoir en les guidant des éléments (16, 17, 13) des moyens de serrage.

8. Dispositif selon l'une quelconque des revendications précédentes, **caractérisé en ce qu'**au moins l'une des surfaces de serrage (22) est traitée superficiellement, par exemple revêtue, rendue rugueuse ou lubrifiée.

9. Dispositif selon l'une quelconque des revendications précédentes, **caractérisé en ce que** la console (6) est réalisée en tôle, de préférence formée par pliage ou emboutissage, en particulier un élément de tôle pliée.

10. Dispositif selon l'une quelconque des revendications précédentes, **caractérisé en ce que** l'élément d'absorption (9, 10) d'énergie consiste en un étrier de déchirage (7) et est de préférence tenu de manière fixe directement sur le châssis (18) par des éléments de serrage (17), et est fixé avec une liaison par serrage.
